# EUROPEAN PATENT SPECIFICATION

(11) **EP 1 676 462 B1**
(45) Date of publication and mention of the grant of the patent: **19.09.2007**
(21) Application number: 05772717.4
(22) Date of filing: 28.07.2005
(51) Int. Cl.: H04Q 7/38

(54) **WIRELESS DELEGATE INFORMATION AND COMMUNICATION DEVICE, METHOD AND SYSTEM**
DRAHTLOS-DELEGAT-INFORMATIONEN UND KOMMUNIKATIONSEINRICHTUNG, VERFAHREN UND SYSTEM
DISPOSITIF, PROCEDE ET SYSTEME DE COMMUNICATION ET D'INFORMATION DE DELEGUES SANS FIL

(30) Priority: 05.08.2004 US 911504
(43) Date of publication of application: 05.07.2006
(73) Proprietor: ShockFish S.A., 1015 Lausanne (CH)
(72) Inventor: BLANK, Rémy, CH-1024 Ecublens (CH); LEDIN, Bendicht, CH-1024 Ecublens (CH); MEIER, Roger, CH-1006 Lausanne (CH); PULCRANO, Jim, CH-1154 Buchillon (CH)
(74) Representative: Wenger, Joel-Théophile
(86) International application number: PCT/IB2005/052537
(87) International publication number: WO 2006/016313

(56) References cited:
- WO-A-03/010986
- WO-A-20/04004395
- GB-A- 2 396 529
- US-A- 6 128 483
- US-B1- 6 529 740
- "ACCENTURE e HP estendono i servizi tecnologici e di comunicazioni per assicurare una migliore connessione ai partecipanti al forum mondiale sull'ec" YAHOO NOTIZIE, [Online] 23 January 2003 (2003-01-23), XP002351718 Retrieved from the Internet: URL:http://it.biz.yahoo.com/030123/90/244v o.html> [retrieved on 2005-10-27]

## Description

### Field of the Invention

The method and apparatus of the present invention relate to wireless information and communication devices for delegates at events.

### Background

A number of different wireless communication systems are in use today at conferences and events (such as management meetings, investor conferences, customer invitations, sales meetings, trade summits or fairs). Typical examples of such systems are audiovisual equipment like wireless microphones or video feeds; wireless voting systems; simultaneous interpretation systems based on infrared technology and voice communication systems like walkie-talkies or cordless telephones. Many of these systems are purpose built and use proprietary technology to serve a single application. Recently, communication systems based on standard wireless connections (such as Wi-Fi or Bluetooth) and standard computing platforms (such as PocketPC or PalmOS) have also been used at events.

Almost all of those systems are optimized for a single application and use one of three types of wireless connections:
a) Point-to-point connections with a base station. (e.g. wireless telephones, Wi-Fi or Bluetooth systems, wireless microphones or video feeds, wireless telephones)
b) Broadcast transmission from a base station to a theoretically unlimited number of receivers (e.g. simultaneous interpretation systems)
c) Peer-to-peer connections which are one to many or point-to-point connections between equivalent devices (e.g. walkie-talkies)

Some event communication systems use combinations of a) Point-to-point connections with a base station and b) Broadcast transmission from a base station to a number of receivers. In these systems, the purpose of the Broadcast transmission is mainly to synchronize and control the behavior of wireless handheld devices communicating with a base station, and further to communicate limited amounts of data to all handheld devices. An example of a remote response system using such methods is disclosed in U.S. Pat. No. 5,724,357.

Delegate information and communication at events is traditionally facilitated by paper-based documents (such as delegate lists, badges, floor plans, agendas, pigeonholes, message boards, feedback forms and the likes) or not at all. Typical disadvantages of this approach are that the information cannot be updated once it is printed and the materials need to be printed too long in advance, when contents are not completely known yet. The cost for producing all this material and gathering the necessary data is significant, in particular if delegate photos are used. The paper documentation is not interactive: delegates of interest cannot be located or contacted efficiently, and messaging or collection of feedback during the event is not efficiently facilitated.

While there have been some attempts to use electronic delegate information and communication systems to facilitate delegate networking, delegate information and interactivity at events, those attempts have been largely unsuccessful. Two approaches can be distinguished:
a) Database-driven systems have been used for delegate information, such as the system developed by HP and Accenture used by the World Economic Forum (www.weforum.org) or the meeting guides by NearSpace (www.nearspace.com).
   In these systems, handheld devices such as the HP iPAQ or Palm personal digital assistants have been used to remotely store a copy of a database residing on a central server and containing the delegate information and other relevant data such as agenda information or floor plans. Storing a copy locally on the wireless handheld device is important for two reasons:
   1. Access to the database must be very fast. Delegates are under time pressure and do not want to wait for server connections and data downloads. All relevant information must be instantly available at any time. This can only be achieved with a database locally stored in the wireless handheld device.
   2. The wireless technologies used for communicating with base stations (also named access points) are usually short range. On-line access to the central server cannot be guaranteed throughout an event (e.g. during a gala dinner on a boat, no access points will be available) but delegates shall still have access to their relevant data, such as the delegate list or agenda information.

   Point-to-point protocols (e.g. Wi-Fi, Bluetooth, Cellular Network) have been used for replicating the central delegate database in the wireless handheld devices (see for example XP002351718). However, these solutions do not scale gracefully with the number of users. Using point-to-point protocols, the demand in bandwidth is proportionate to the product of the number of delegates in the database and the number of handheld devices being used, these two numbers generally being similar, typically ranging anywhere from hundreds to thousands. The quadratically increasing demand in bandwidth when using point-to-point protocols is especially hindering when the delegate database contains image data and the number of delegates gets big. Even expensive infrastructure (multiple servers and base stations) and fast wireless transmission do not compensate for the technical deficiencies of this approach.
   Another form of database-driven networking systems is found in the "social networking applications" used on the Internet, such as Spoke, LinkedIn, Ecademy or PowerMingle. These Internet systems need an on-line connection to a central server to serve their users and have therefore only limited applications during live events and conferences.
b) Profile-driven systems have been used for people networking at events, namely nTag (www.ntag.com) based on research done by MIT Media Lab. While such systems can stimulate some conversations, capturing the complexity of business-to-business relationships by matching profiles has turned out to be a challenge. At best, these profile-driven systems are increasing the number of random connections made anyway at events, while maintaining the random nature of such connections.

In a consumer environment Lovegety pursued a similar approach: 3 options (talk, karaoke and sex) plus the choice of female or male devices allow the user to look out for partners with the same objectives based on physical proximity to these partners. It is very hard to promote such a device in a consumer environment, since the market penetration needed for the system to be useful is very high, and therefore the early adopters are likely to be frustrated.

Users of currently available systems are frustrated by the slow configuration of the wireless handheld devices due to the scalability issues described above. Due to the same limitations of the currently used point-to-point protocols, the possibilities for updating the databases in hundreds or thousands of wireless handheld devices throughout an event have been very limited, and big delays are the rule, limiting the advantages of wireless electronic systems over traditional paper based delegate information.

The current solutions lack either the facility to effectively choose participants of interest (profile-driven systems) or the facility to effectively find participants of interest (database-driven systems) or both. Since effective social networking depends on having both these facilities, choosing the right target and finding it in the crowd, the usefulness of current systems for delegate networking has been limited and no real advantages over paper based systems could be identified.

Users are also unsatisfied with the fact that the batteries of current handheld devices don't last throughout the event and need to be recharged regularly, making it necessary for the delegate to deal with chargers and cables. The high power consumption of current devices is due to the use of standard hard- and software (such as PocketPC, Palm, Wi-Fi and Bluetooth) that is not optimized for this application.

A wireless delegate information system can only provide value to an event if it is accepted by a majority of the delegates as a useful tool. A key element necessary to achieve delegate acceptance of such a system are efficient logistics. Current systems don't achieve zero queue check-in and easy training of users at low operating cost. Additionally, the incomplete feature set of current systems has them appeal only to a subgroup of users looking for the exact feature covered by the particular system in use. Therefore, limited value to the user makes it difficult to get the current systems accepted as the main information system of an event and delegates are likely to leave their wireless handheld device at their hotel room or to not use one at all. It can easily happen with currently available systems that only a minority of delegates of a certain event use the system, which defeats much of it's purpose, in particular for delegate networking.

Accordingly, there is a need for a wireless delegate information and communication system capable of wirelessly configuring wireless handheld devices to the event where they are used and wirelessly replicating a centrally managed database in near real time to hundreds or thousands of mobile handheld devices. Such a system shall be able to efficiently distribute bulk data that is the same for all wireless handheld devices as well as personalized data to groups of handheld devices or individual handheld devices. It shall propagate database updates and schedule changes to all wireless handheld devices in a near real-time fashion throughout the event.

Furthermore, there is a need for a wireless delegate information and communication system combining efficient and near real-time distribution of said database with real-time information about the physical proximity of people and places contained in the database.

Moreover, a delegate information system combining multiple features will be more likely to satisfy a majority of delegates and achieve the critical value to be commercially successful. Such multiple features can be people database, people finding facility and electronic business card exchange for delegate networking, messaging for delegate communication, personalized agenda and floor plans for delegate information and electronic questionnaires or on-line voting for interactivity.

There is also a need for a wireless delegate information system combining these features with efficient logistics. Check-in and Checkout process, device exchange (in case of malfunction or empty batteries) must happen very quickly (typically less than 15 seconds), to avoid additional queues at the beginning of the event and to integrate seamlessly with existing processes taking the same amount of time (such as handing out delegates' badges). Batteries shall last several days or even a full week without recharging.

The advantages of such a system are manifold. It is the only way for a delegate to efficiently identify contacts of interest at an event with hundreds or thousands of people. It gives the delegate up-to-date information about the conference agenda, places where sessions are held as well as 1:1 meetings scheduled with other delegates, for example during a trade summit with pre-scheduled buyer-supplier meetings. It allows every delegate to transmit a message to any other delegate at any time during an event.

To an event organizer such a system provides a mean to deliver information to all delegates or groups of delegates at specific points in time. This is of particular use to arrange surprises or manage breakout groups. Also it is a mean to track the whereabouts of the wireless handheld devices and therefore delegates to generate attendance statistics or simply find missing people or misplaced devices. Electronic voting and survey facilities allow the organizer to interact fast and efficiently with delegates. Finally, since valuable data about the delegates is generated and stored in the central database (such as delegate photos, survey results) it allows automatically generating extremely useful documentation about the event (such as printable people gallery, and websites with delegate photos). Using the data generated by each individual delegate (such as personal contact list and documentation orders) it allows to transmit personalized follow-up e-mails to each delegate with the delegate's personal collection of information about the event (such as electronic business cards of other delegates or presentation slides).

The applicant is unaware of the existence of any commercially viable wireless delegate information and communication system, which contains the above features and addresses the above-described shortcomings in the prior art.

### Summary of the Invention

In a preferred embodiment, the present invention provides a method and apparatus serving hundreds or thousands of delegates of conferences and other live events (such as management meetings or training seminars) with up-to date information related to the event and the delegates. Additionally, the present invention can link such information with information about the proximity of delegates using the system. It can also transmit messages from delegate to delegate or from a central server to delegates or groups of delegates.

It is a first object of the present invention to set forth a wireless delegate information and communication system that is able to remotely replicate and update a centrally stored database in near real time to hundreds or thousands of wireless handheld devices used by delegates at conferences and live events and to offer the capability for the individual delegate to select the delegates of his interest from said database and to locate them in the crowd of an event. This is achieved through a wireless interactive participants communication device comprising a graphical display, a keypad, a microprocessor accessing a memory, this communication device comprising a first reception channel to receive the broadcasted list of participants and their related data that are stored in the memory, this data comprising an identifying mark which is unique per participant, wherein it further comprises a second communication channel to send and receive identifying packets comprising the identifying mark of the sender allowing to identify other communication devices, and comprises retrieving means to retrieve the related data to the identified participant from the list of participants and means to display the related data of said participant.

This device further comprises a filter to detect only the identifying mark of pre-selected participants. The reception channel comprises analyzing means to determine the signal strength of the received identifying packet and to display the distance between the communication device and the sender identification.

This reception channel can also comprise analyzing means to determine the time of flight of packets exchanged with other devices within range and to display the distance between the communication device and the other device within range.

Another object of the invention is to allow a user to send and receive messages from other users or from the management center. This is achieved through a wireless device as described above which comprises a third communication channel to send and receive point-to-point messages directly to another device or via a base station to and from a management center.

A further object of the present invention is to allow for remotely customizing the database stored in each wireless handheld device to the needs of the user of said handheld device.

Yet another object of the present invention is to offer the capability for the individual delegate to display data contained in said database about people in his proximity using wireless handheld devices. Upon receiving the identification packet from another device, a picture of the identified sender can be retrieved from the database and displayed.

It is another object of the present invention to offer a complete feature set to event delegates and organizers including people database, people finding facility and electronic business card exchange for delegate networking, messaging for delegate communication, personalized agenda and floor plans for delegate information and electronic questionnaires or on-line voting for interactivity.

Yet another object of the present invention is to allow building compact wireless handheld devices that perform these functions throughout an event and therefore do not need to be recharged. Wireless handheld devices can therefore be handed out at the beginning and returned at the end of an event.

It is a further object of the present invention to offer an organizer efficient logistics methods allowing to check-in and check out hundreds or thousands of people in a time window as short as an hour.

### Brief Description of the Drawings

The invention may be better understood by referring to the accompanying drawings in which :
- The Figure 1 shows an overview of the system,
- The Figure 2 shows the handheld communication device.
- The Figure 3 shows a functional diagram of the handheld device.

### Detailed Description of the Invention

These and other objects of the invention will be apparent to those skilled in the art from the following detailed description of the invention, the accompanying drawings and the appended claims.

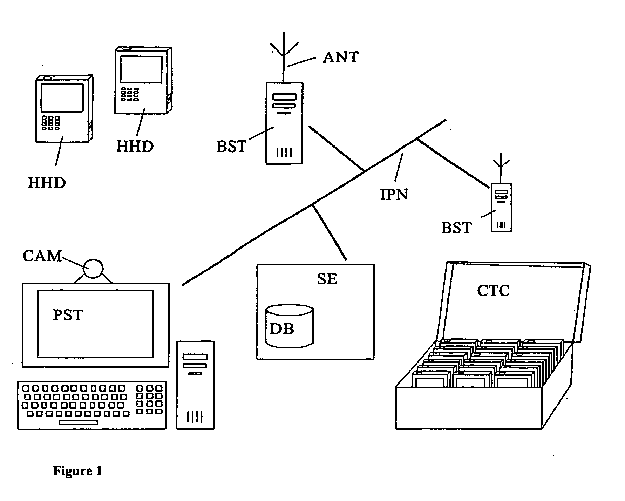

In one embodiment of this invention, the system illustrated in the Figure 1 is composed of a central server SE managing the system, base stations BST and handheld devices HHD used by the delegates. Base stations BST communicate with the server SE via a wired or wireless electronic network and with handheld devices HHD via a wireless network.

Data related to the event and the delegates is uploaded onto a central database DB in an application server. Data can also be edited manually throughout an event by means of websites generated by the server, e.g. for adding or updating delegate profiles to the database or sending messages to delegates. The server then compiles one or multiple "broadcast" files and sends this file / these files to one or multiple wireless base stations. These base stations BST are located at strategic places (such as auditoria; coffee areas, reception) throughout the event venue and connected to the server by an electronic network IPN (such as an Ethernet local area network with Internet protocol). A broadcast file consists of (a) configuration data allowing the wireless handheld devices to configure their local database appropriately for the event where they are used, (b) a directory containing name and version number of database records and (c) the content of such database records. According to their importance, certain database records may appear more often than others in a broadcast file to reduce the delay between compiling the broadcast file and receiving these records at the wireless handheld devices.

The base stations BST then endlessly repeat sending the broadcast file over a distinct wireless channel (the Broadcast Channel), until they receive a more recent version of the broadcast file from the server, case upon which they start repeating said more recent version. The Broadcast Channel may be a single digital data channel; a frequency hopping sequence; a direct sequence spread spectrum channel or even an ultra wideband transmission.

Wireless handheld devices HHD for the event delegates and staff start listening to the Broadcast Channel as soon as their batteries are being charged. They synchronize themselves to the base station BST they receive best. Upon receiving the configuration data contained in the Broadcast File, they automatically configure themselves and set up a local database structure for the event where they are being used.

Once the wireless handheld devices HHD have configured themselves, they listen to the directory contained in the Broadcast File and compare the record names and version numbers they receive to the ones already stored in their local database. They then generate a Wake-Up Program, allowing them to listen only to the content of changed or new records, thus saving energy and computing power. Upon receiving the content of changed or new database records, the wireless handheld devices HHD save these records in their local database, producing a replica of the database centrally stored in the server.

Now the wireless handheld devices are almost ready to be handed out to the delegates. At this stage all wireless handheld devices contain the same data and are not yet assigned to a certain delegate. Every handheld device contains a unique physical identity number (such as a serial number). The last step before handing out the device is personalizing it to a specific delegate: a logical identity number corresponding to a delegate stored in the central database is assigned to the device.

Further than listening to directories and new content on the Broadcast Channel, the handheld devices regularly transmit an ID packet containing at least their physical or logical identity numbers. It can comprise additional data such as battery level indication, the intention to connect to a base-station, the time until the device will next listen on the ID Channel or the current average length of the interval between ID packets. ID packets are transmitted on the so-called ID Channel, which is different from the Broadcast Channel and may be a single frequency-shift-keyed digital data channel; a frequency hopping sequence; a direct sequence spread spectrum channel or even an ultra wideband transmission. A handheld device adjusts the length of the interval between sending these ID Packets with a random delay to avoid regular collisions. Furthermore, and in function of the number of other devices in its vicinity, a handheld device can lengthen the interval between sending the ID Packets to avoid interference or shorten the interval to reduce the amount of time needed to detect another handheld device.

By regularly listening to the ID Channel and measuring the strength of the received signal, base stations and handheld devices create and regularly update a neighborhood list, containing the identity numbers and received signal strength of other devices in their neighborhood.

Therefore handheld devices can create and display to the user a list of other delegates in the vicinity of the device and sort this list in the approximate order of distance by simply linking the identity numbers and received signal strenght information contained in the neighborhood list with the delegate data contained in the local replica of the central database.

Furthermore, upon updating the neighborhood list, handheld devices can check if the logical identity numbers of specific devices contained in the people database (such as people previously flagged by the user of the handheld device) appear in the neighborhood list. While searching the neighborhood list for specific delegates, the hand held device may also check if the signal strength of the ID packets associated with these delegates exceeds a pre-defined threshold and alert the user to the presence of the select delegate within a certain range.

While the Broadcast Channel is used to transmit bulk data that is the same for all devices, and the ID Channel is used to discover nearby devices, the central server and the wireless handheld devices can also communicate through base stations in a point-to-point fashion. A third channel, called the Point-to-Point Channel is assigned for this purpose. The Point-to-Point Channel is different from the Broadcast Channel and the ID Channel and may be a single frequency-shift-keyed digital data channel; a frequency hopping sequence; a direct sequence spread spectrum channel or even an ultra wideband transmission.

Handheld devices briefly listen to the Point-to-Point Channel after sending the ID packet to allow base-stations to contact them on the Point-to-Point Channel. A base station may use the Point-to-Point Channel to transmit a message from the server to a specific handheld device that was detected in the proximity of said base station by means of the ID Channel. A base station may also connect to a handheld device that has signaled its intention to transmit a message to the server in its ID packet.

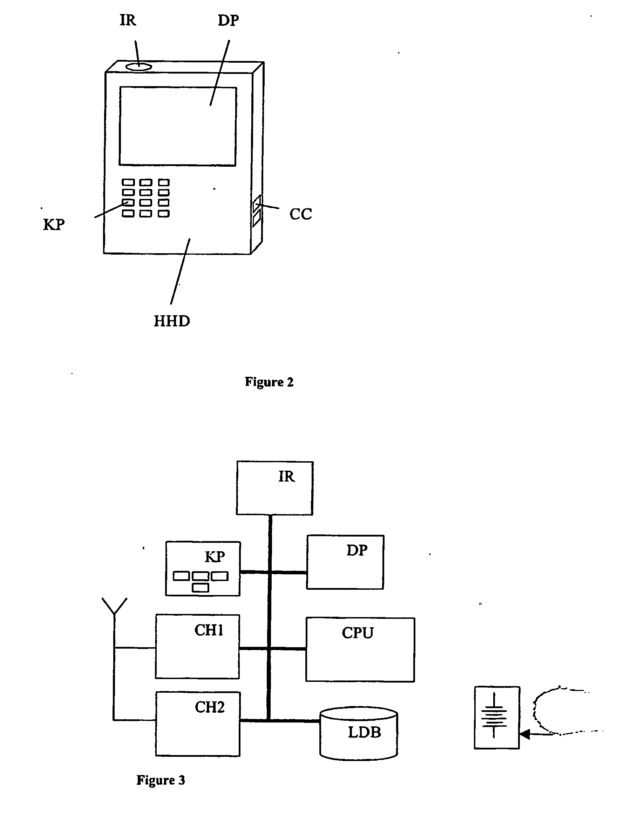

The handheld device HHD has shown in Figure 2 and 3, has a user interface similar to cell phones composed of buttons KP, graphical screen or touch screen DP, vibrator, buzzer and a bi-directional infrared interface IR. It is also fitted out with communication channels CC and managed by a central processing unit CPU. It can display contents of the local database LDB stored in its memory (such as delegate profiles and photos, messages, agenda items, neighborhood list or electronic business cards) to its user by the press of a button. It can also alert the user and display records stored in the local database upon an external trigger (such as a message being received, a person of interest being detected in its neighborhood or a reminder for an agenda item becoming active). The user interface also allows the user to configure the device to her needs, e.g. to flag people of their interest in the people database. Furthermore it allows for data entry e.g. to send text messages or respond to feedback forms.

Connection to the base stations is preferably handled through the first communication means CH1 and point-to-point connection is preferably handled through the second communication channel CH2.

In a different embodiment, the server sends changes in the database to the base stations and the base stations compile a new Broadcast File upon receiving such changes.

In another embodiment, point-to-point connections between base stations and handheld devices are established differently. Instead of the handheld devices listening to the Point-to-Point Channel shortly after sending their ID Packet, base stations poll handheld devices by sending a short radio packet during the time when the handheld devices listen to the ID Channel and handheld devices switch to the Point-to-Point channel only upon being polled by the base station to do so.

In a further embodiment, handheld devices send messages to other devices within their range directly and without going through the base station on the Point-to-Point channel, as soon as no base station is present.

In yet a different embodiment, handheld devices send all settings and choices made by the user to a central server through the Point-to-Point Channel, so there is a back-up in case a handheld device gets stolen, lost, damaged or discharged.

In another embodiment the logical identity number corresponding to the person using a handheld device is assigned to the handheld device by means of one or multiple photo stations. A photo station PST takes a picture of the delegate who is going to use the handheld device. Since this process needs to be fast, it is done as follows: the photo station (consisting of a computer, one or multiple screens, a camera CAM, a keyboard and an infrared port) downloads the up-to-date delegate list from the server via an electronic network. A screen of the photo station is placed in front of the delegate similar to a mirror and displays live video from the camera. The live video allows the delegate to position himself in front of the camera and to get ready for the picture. The screen is height adjustable by the operator and/or the delegate, so delegates of different heights can stand in front of the screen and be photographed straight. Now a handheld device is placed near the infrared port of the photo station and establishes an infrared connection with the photo station. Upon establishing said infrared connection, the photo station displays to the operator the delegate list previously downloaded from the server. The operator learns the name of the delegate (e.g. from a name badge the delegate is wearing or by asking the delegate) and selects the name in the delegate list. The selection of the name in the delegate list (by mouse click or keyboard) is at the same time the trigger telling the camera to take a picture of the delegate. Then the photo station sends the picture taken and the logical identity number of the delegate to the handheld device by infrared. The photo station also sends the physical identity number of the device connected by infrared, the logical identity number of the delegate selected by the operator and the picture of said delegate to the server via electronic network.

Upon receiving a new set of picture, logical and physical identity number, the server adds this data to its central database, identifying the delegate with the picture and the handheld device. The new database is replicated wirelessly in all handheld devices within range of base stations via the broadcast mechanism described above. As soon as a handheld device has received the update it can display the picture along with a delegate's profile when the user displays the profile of the newly registered delegate. A user can display a profile e.g. by browsing the delegate database, by browsing the neighborhood list or when her device alerts the user to the presence of a previously selected delegate of interest.

In yet a further embodiment the bi-directional infrared interface of the handheld device is used to exchange electronic business cards between delegates in a point and shoot fashion. Two handheld devices connect by infrared and transmit their logical identities to each other. After receiving a business card, a user is granted access to private data about the person sending the card not visible in the publicly available database (such as telephone numbers or e-mail addresses).

Upon receiving a physical identity number (representing a business card) by infrared, a handheld device communicates the reception of the card to the server via the Point-to-point Channel. The server therefore always has an up-to-date list of all electronic business cards that have been exchanged. This list is used after the event to generate a personalized e-mail message for every delegate containing the business cards he has collected in different file formats (such as html, vcard or comma separated values or jpeg for pictures).

In a different embodiment, the handheld device has a special user interface for interactive voting and the system is complemented by a software connecting to an interactive presentation system (such as a plug-in for Microsoft PowerPoint) communicating with the central server over an electronic network. Voting questions are projected on a screen and the delegates use their handheld devices to select an answer. This answer, together with the logical identity number of the handheld device is then sent to the base station and further on to the server by the handheld device. The server then generates live results statistics that are sent back to the interactive presentation system in real time and displayed to the voting public. The server then also generates tabulated data (e.g. in Microsoft Excel format) containing each individual delegates' responses and delegate profile to allow for further (e.g. demographical) analysis of the votes conducted with the system.

In yet another embodiment, the server sends data specific to a delegate to her handheld device via the Point-to-Point Channel. Such delegate specific data can contain the workshops selected by said delegate, one-to-one meetings previously arranged with other delegates, the logical identity numbers of delegates of interest previously specified by the user of the handheld device, electronic business cards or messages the delegate has exchanged with other delegates. Such a point-to-point transmission of delegate specific data can happen immediately after the registration, after exchanging a delegate's device or any time throughout an event.

In a further embodiment, a delegate using a handheld device can choose to be invisible to other delegates. A first solution will be to mark the identification packet sent with an appropriate flag so that the receiving device can recognize that the sender wish to stay invisible. Another solution will be to stop sending such identification packet.

In yet a further embodiment, the handheld devices sense when they are put into a charge suitcase CTC and use this signal to optimize logistics. When the handheld device is put into the charge suitcase it erases its logical identity number and all delegate specific data, making itself ready to be handed out again to a different delegate. It also sends a message to the server, telling the server that the device has been returned. The server therefore has an always up-to-date list of the devices that haven't been returned and of the people using these devices.

In yet a different embodiment, when the handheld devices are handed to the participants the devices are in a "try before you buy" mode. The "try before you buy" mode offers certain features only for a limited amount of time, a limited number of uses or not at all. The handheld devices have furthermore a facility allowing the user to make a decision to buy the full service. Users who don't buy the full service have limited functionality (e.g. voting, personalized agenda, receiving and responding to messages). Users who buy the full service have full functionality (e.g. they also have delegate database, the ability to send messages and exchange business cards and to display information about people in their vicinity).

The present invention is therefore a highly effective and cost efficient way to facilitate delegate networking, delegate communication, delegate information and interactivity at conferences and events.

What the present invention accomplishes, which no previous system has done before is to efficiently distribute event and delegate related information over a wireless channel and then use this information to describe real people and things in the proximity of a delegate. There is no more name badge gazing or guesswork about who those people are. The delegate knows in advance whether to walk up to a delegate and talk to them or not. No hassles. No need to waste time on random small talk.

## Claims

1. Wireless interactive participants communication device (HHD) comprising a graphical display (DP), a keypad (KP), a microprocessor (CPU) accessing a local database (LDB), this communication device comprising a first communication channel (CH1) to receive, from a central server, broadcasted data comprising a list of participants and related data and to store the broadcasted data into the local database (LDB), these data comprising an identifying mark which is unique per participant, **characterized in that** it further comprises a second communication channel (CH2) to send and receive identifying packets comprising the identifying mark of the sender allowing to identify other communication devices, and comprises retrieving means to retrieve the related data to the identified participant from the list of participants and means to display the related data of said participant.

2. Wireless communication device (HHD) of claim 1, **characterized in that** it further comprises a third communication channel (CC) to send and receive point-to-point messages directly to another wireless communication device (HHD) or via base stations (BST) to and from a central server (SE).

3. Wireless communication (HHD) device of claim 1, **characterized in that** it comprises a filter to detect only the identifying mark of pre-selected participants.

4. Wireless communication device (HHD) of claim 1, **characterized in that** it comprises analyzing means to determine the signal strength of the received identifying packet and to display the distance between the wireless communication device and the sender identification.

5. Wireless communication device (HHD) of claim 1, **characterized in that** it comprises analyzing means to determine the time of flight of packets exchanged with other wireless communication devices within range and to display the distance between the communication device and the other wireless communication device within range.

6. Wireless communication device (HHD) of claim 1, **characterized in that** the data related to the participants comprise a picture of the participant, this picture being displayed once the wireless communication device of said participant is detected.

7. Wireless communication device (HHD) of claim 1, **characterized in that** it comprises pre-programmed broadcasted messages which are stored in the memory and means to select one of these messages, to edit pre-defined sections of said message and to transmit said message to another wireless communication device.

8. Wireless communication device (HHD) of claim 1, **characterized in that** it further comprises means to prohibit other wireless communication devices from informing their users about the presence of the participant using the wireless communication device.

9. Wireless communication device (HHD) of claim 2, **characterized in that** some of the data related to a participant is accessible only after the receipt of an authorization code by the wireless communication device of said participant through the third channel (CC) or through an infrared interface (IR) integrated in the wireless communication device.

10. Wireless communication device (HHD) of claim 2, **characterized in that** it further comprises sending messages over a third channel (CC) that personalize the data received via the first communication channel (CH1) to the needs of an individual participant.

11. Wireless communication device (HHD) of claim 2, **characterized in that** the wireless communication device detects the connection into a battery charger (CTC) to optimize logistics.

12. Communication method between a plurality of participants, each having a wireless communication device (HHD) comprising a unique identification mark, a local data base (LDB), a first communication channel (CH1) to receive data from a central server (SE), this method comprising the steps of:
- Receiving, from the central server, first broadcasted data comprising a list of participants and related data through the first communication channel (CH1), each participant being identified by a unique identification mark,
- storing these broadcasted data in the local data base (LDB), **characterized in that**, it comprises the additional steps of:
- receiving through a second communication channel (CH2) able to communicate between two wireless communication devices, identification packets from other wireless communication devices (HHD), each packet comprising the identification mark of the sender,
- retrieving the related data of the participant in the local data base (LDB) based on the received identification mark,
- displaying the particulars of said participant.

13. Communication method of claim 12, **characterized in that** it further comprises the steps of
- sending and receiving point-to-point messages directly to another wireless communication device or via a base station (BST) to a central server (SE) through a third communication channel (CC).

14. Communication method of claim 12, **characterized in that** it further comprises the steps of:
- selecting at least one participant in the local data base (LDB),
- receiving the identification packet and extracting the identification mark,
- comparing said identification mark with the identification mark of the selected participant,
- prompting on the wireless communication device in case the expected participant is detected.

15. Communication method of claim 14, **characterized in that** it further comprises the steps of:
- detecting a signal strength of the identification packet,
- computing a distance to the wireless communication device (HHD) which sends the identification packet,
- organizing a list of detected participants according to the distance.

16. Communication method of claim 14, **characterized in that** it further comprises the step of retrieving a picture of said participant.

17. Communication method of claim 12, **characterized in that** it further comprises the steps of:
- requesting to the other wireless communication device, an authorization code,
- receiving said authorization code from the other wireless communication device,
- accessing hidden data in the local data base related to said participant.

18. Communication method of claim 13, **characterized in that** it further comprises the steps of:
- receiving pre-programmed messages through the first channel (CH1),
- storing said messages in the local data base (LDB),
- selecting one message from the stored messages,
- editing pre-defined parts of said message,
- selecting from the list of participants, the recipient of said message,
- sending said message to the selected participant through the third channel (CC).

19. Communication method of claim 12, **characterized in that** it further comprises the steps of:
- receiving through the first channel (CH1), a list of activities available during a pre-defined period,
- storing these list of activities in the local data base (LDB),
- displaying the list and selecting one activity from the list,
- sending a message to the central server relating to the activity selected and the participant sending this message.

20. Communication method of claim 19, **characterized in that** the message confirms the participation of the participant to the activity.

21. Communication method of claim 19, **characterized in that** the message books a place to the activity.

22. Communication method of claim 19 **characterized in that** the message confirms the participation of the participant to a particular event of the activity.

23. Communication method of claim 19, **characterized in that** it further comprises the steps of
- sending back by the central server (SE) a message confirming the availability of space in a particular event of the activity
- sending back by the central server a message refusing the inscription to the selected activity if no space is available.

24. Communication method of claim 12, **characterized in that** it further comprises the steps of:
- receiving through the first channel (CH1), a list of topics for selection,
- displaying the topics on the wireless communication device,
- selecting on the wireless communication device (HHD), one topic among the topics proposed,
- sending a message to the central server (SE) with the topic selected together with the identification mark of the wireless communication device.

25. Communication method of claim 12, **characterized in that** it further comprises the steps of
- presenting a limited functionality to the user
- the user selecting to buy the full service
- transmitting the user's purchase decision to the central server (SE)
- unlocking the full functionality

26. Communication method of claim 12, **characterized in that** it further comprises the steps of
- transmitting personal data and parameters stored in the wireless communication device to the central server (SE)
- using said data to program a replacement wireless communication device in case of failure
- using said data to generate a personalized documentation for the participant
- making available said documentation to the participants via e-mail or the Internet

27. Wireless interactive communication system comprising a central server (SE) accessing a main database (DB), at least one base station (BST), at least two wireless communication devices (HHD) each having a local database (LDB), graphical display (DP), a keypad (KP), a microprocessor (CPU) accessing the local database (LDB), this wireless communication devices (HHD) comprising a first communication channel (CH1) to the base station (BST) for receiving and storing into the local database (LDB), broadcasted data comprising a list of participants and related data, these broadcasted data comprising an identifying mark which is unique per participant, **characterized in that** it further comprises a second communication channel (CH2) to send and receive identifying packets comprising the identifying marks of wireless communication devices (HHD), and comprises retrieving means to retrieve the related data to the identified participant from the list of participants and means to display the related data of said participant.

28. Wireless system of claim 27, **characterized in that** the wireless communication device (HHD) further comprises a third communication channel (CC) to send and receive point-to-point messages directly to another wireless communication device (HHD) or via the base station (BST) to and from the central server (SE).

29. Wireless system of claim 27, **characterized in that** the wireless communication device (HHD) comprises analyzing means to determine the received signal strength of packets received from another wireless communication device within range and to display an estimate of the distance between the wireless communication device and the other wireless communication device within range.

30. Wireless system of claim 27, **characterized in that** the wireless communication device (HHD) comprises analyzing means to determine the time of flight of packets exchanged with another wireless communication device within range and to display the distance between the wireless communication device and the other wireless communication device within range.

31. Wireless system of claim 27, **characterized in that** the server (SE) broadcasts pre-programmed messages which are stored in the local database (LDB) of the wireless communication device (HHD), the latter comprising means to select one of these messages, to edit pre-defined section of said message and to transmit said message to another wireless communication device (HHD).

32. Wireless system of claim 27, **characterized in that** some of the data related to a participant are accessible only after the receipt of an authorization code by the wireless communication device of said participant through the third channel (CC) or through an infrared interface (IR) integrated in the wireless communication device.

33. Wireless system of claim 27, **characterized in that** the wireless communication device automatically detects when it is connected to a charging unit (CTC).

## Patentansprüche

1. Drahtloses interaktives Teilnehmer-Kommunikationsgerät (HHD) mit einer Grafikanzeige (DP), einem Tastenfeld (KP) .und einem auf eine lokale Datenbank (LDB) zugreifenden Mikroprozessor (CPU), wobei dieses Kommunikationsgerät einen ersten Empfangskanal (CH1) umfasst, um von einem zentralen Server Broadcast-Daten zu empfangen, die eine Teilnehmerliste und verwandte Daten umfassen, und die Broadcast-Daten in der lokalen Datenbank (LDB) zu speichern, und wobei diese Daten eine ID umfassen, die für jeden Teilnehmer einzigartig ist, **dadurch gekennzeichnet, dass** es weiter einen zweiten Kommunikationskanal (CH2) umfasst, um ID-Pakete zu senden und zu empfangen, die die ID des Absenders enthalten, mit der andere Kommunikationsgeräte identifiziert werden können, dass es Abrufmittel umfasst, um auf die in der Teilnehmerliste identifizierten Teilnehmer bezogene Daten abzurufen, sowie Mittel, um die auf den Teilnehmer bezogenen Daten anzuzeigen.

2. Drahtloses Kommunikationsgerät (HHD) nach Anspruch 1, **dadurch gekennzeichnet, dass** es weiter einen dritten Kommunikationskanal (CC) umfasst, um Punkt-zu-Punkt-Nachrichten direkt zu einem anderen drahtlosen Kommunikationsgerät (HHD) oder über Basisstationen (BST) zu einem zentralen Server (SE) zu senden bzw. von dort zu empfangen.

3. Drahtloses Kommunikationsgerät (HHD) nach Anspruch 1, **dadurch gekennzeichnet, dass** es ein Filter umfasst, um nur die IDs von im Voraus ausgewählten Teilnehmern zu erfassen.

4. Drahtloses Kommunikationsgerät (HHD) nach Anspruch 1, **dadurch gekennzeichnet, dass** es Analysemittel umfasst, um die Signalstärke des empfangenen ID-Pakets zu ermitteln und die Entfernung zwischen dem drahtlosen Kommunikationsgerät und die Absender-ID anzuzeigen.

5. Drahtloses Kommunikationsgerät (HHD) nach Anspruch 1, **dadurch gekennzeichnet, dass** es Analysemittel umfasst, um die Laufzeit von Paketen zu ermitteln, die mit anderen drahtlosen Kommunikationsgeräten in Reichweite ausgetauscht werden, und die Entfernung zwischen dem Kommunikationsgerät und dem anderen drahtlosen Kommunikationsgerät in Reichweite anzuzeigen.

6. Drahtloses Kommunikationsgerät (HHD) nach Anspruch 1, **dadurch gekennzeichnet, dass** die auf die Teilnehmer bezogenen Daten ein Bild des Teilnehmers umfassen, wobei dieses Bild angezeigt wird, nachdem das drahtlose Kommunikationsgerät des Teilnehmers erfasst worden ist.

7. Drahtloses Kommunikationsgerät (HHD) nach Anspruch 1, **dadurch gekennzeichnet, dass** es vorprogrammierte Broadcast-Nachrichten, die im Speicher gespeichert sind, sowie Mittel umfasst, um eine dieser Nachrichten auszuwählen, im Voraus definierte Abschnitte dieser Nachricht zu editieren und die Nachricht an ein anderes drahtloses Kommunikationsgerät zu übermitteln.

8. Drahtloses Kommunikationsgerät (HHD) nach Anspruch 1, **dadurch gekennzeichnet, dass** es weiter Mittel umfasst, um andere drahtlose Kommunikationsgeräte daran zu hindern, ihre Benutzer über die Anwesenheit des Teilnehmers, der das drahtlose Kommunikationsgerät nutzt, zu informieren.

9. Drahtloses Kommunikationsgerät (HHD) nach Anspruch 2, **dadurch gekennzeichnet, dass** einige der auf einen Teilnehmer bezogenen Daten erst nach Empfang eines Genehmigungscodes durch das drahtlose Kommunikationsgerät des Teilnehmers über den dritten Kanal (CC) oder über eine in das drahtlose Kommunikationsgerät integrierte Infrarot-Schnittstelle (IR) zugänglich sind.

10. Drahtloses Kommunikationsgerät (HHD) nach Anspruch 2, **dadurch gekennzeichnet, dass** es weiter umfasst, Nachrichten, die die über den ersten Kommunikationskanal (CH1) empfangenen Daten auf die Bedürfnisse eines einzelnen Teilnehmers persönlich zuschneiden, über einen dritten Kanal (CC) zu senden.

11. Drahtloses Kommunikationsgerät (HHD) nach Anspruch 2, **dadurch gekennzeichnet, dass** das drahtlose Kommunikationsgerät die Verbindung zu einem Batterieladegerät (CTC) erkennt, um die Logistik zu optimieren.

12. Kommunikationsverfahren zwischen einer Mehrzahl von Teilnehmern, von denen jeder ein drahtloses Kommunikationsgerät (HHD) besitzt, das eine einzigartige ID, eine lokale Datenbank (LDB) und einen ersten Kommunikationskanal (CH1) zum Empfang von Daten von einem zentralen Server (SE) umfasst, wobei dieses Verfahren die Schritte umfasst:
- Empfang von Broadcast-Daten, die eine Teilnehmerliste und verwandte Daten umfassen, vom zentralen Server über den ersten Kommunikationskanal (CH1), wobei jeder Teilnehmer durch eine einzigartige ID identifiziert wird,
- Speicherung dieser Broadcast-Daten in der lokalen Datenbank (LDB), **dadurch gekennzeichnet, dass** es die zusätzlichen Schritte umfasst:
- Empfang von ID-Paketen von anderen drahtlosen Kommunikationsgeräten (HHD) über einen zweiten Kommunikationskanal (CH2), der zur Kommunikation zwischen zwei drahtlosen Kommunikationsgeräten befähigt ist, wobei jedes Paket die ID des Absenders umfasst,
- Abruf der auf den Teilnehmer bezogenen Daten auf der Grundlage der empfangenen ID in der lokalen Datenbank (LDB),
- Anzeige der Details des Teilnehmers.

13. Kommunikationsverfahren nach Anspruch 12, **dadurch gekennzeichnet, dass** es weiter die Schritte umfasst,
- Punkt-zu-Punkt-Nachrichten über einen dritten Kommunikationskanal (CC) direkt zu einem anderen drahtlosen Kommunikationsgerät oder über eine Basisstation (BST) zu einem zentralen Server (SE) zu senden und zu empfangen.

14. Kommunikationsverfahren nach Anspruch 12, **dadurch gekennzeichnet, dass** es weiter die Schritte umfasst:
- in der lokalen Datenbank (LDB) mindestens einen Teilnehmer auszuwählen,
- das ID-Paket zu empfangen und die ID herauszuziehen,
- diese ID mit der ID des ausgewählten Teilnehmers zu vergleichen,
- bei Erkennung des erwarteten Teilnehmers auf dem drahtlosen Kommunikationsgerät zu signalisieren.

15. Kommunikationsverfahren nach Anspruch 14, **dadurch gekennzeichnet, dass** es weiter die Schritte umfasst:
- die Signalstärke des ID-Pakets zu erfassen,
- einen Abstand zu dem drahtlosen Kommunikationsgerät (HHD) zu berechnen, das das ID-Paket sendet,
- eine nach dem Abstand geordnete Liste der erkannten Teilnehmer zu organisieren.

16. Kommunikationsverfahren nach Anspruch 14, **dadurch gekennzeichnet, dass** es weiter den Schritt umfasst, ein Bild des Teilnehmers abzurufen.

17. Kommunikationsverfahren nach Anspruch 12, **dadurch gekennzeichnet, dass** es weiter die Schritte umfasst:
- vom anderen drahtlosen Kommunikationsgerät einen Genehmigungscode anzufordern,
- den Genehmigungscode vom anderen drahtlosen Kommunikationsgerät zu empfangen,
- in der lokalen Datenbank auf verborgene Daten zuzugreifen, die sich auf den Teilnehmer beziehen.

18. Kommunikationsverfahren nach Anspruch 13, **dadurch gekennzeichnet, dass** es weiter die Schritte umfasst:
- vorprogrammierte Nachrichten über den ersten Kanal (CH1) zu empfangen,
- diese Nachrichten in der lokalen Datenbank (LDB) zu speichern,
- *eine* Nachricht unter den gespeicherten Nachrichten auszuwählen,
- im Voraus definierte Teile dieser Nachricht zu editieren,
- aus der Teilnehmerliste den Empfänger dieser Nachricht auszuwählen,
- diese Nachricht über den dritten Kanal (CC) an den ausgewählten Teilnehmer zu senden.

19. Kommunikationsverfahren nach Anspruch 12, **dadurch gekennzeichnet, dass** es weiter die Schritte umfasst:
- über den ersten Kanal (CH1) eine Liste von Aktivitäten zu empfangen, die während einer im Voraus definierten Zeitperiode verfügbar sind,
- diese Liste von Aktivitäten in der lokalen Datenbank (LDB) zu speichern,
- die Liste anzuzeigen und *eine* Aktivität aus der Liste auszuwählen,
- eine Nachricht an den zentralen Server zu senden, die sich auf die ausgewählte Aktivität und den diese Nachricht sendenden Teilnehmer bezieht.

20. Kommunikationsverfahren nach Anspruch 19, **dadurch gekennzeichnet, dass** die Nachricht die Teilnahme des Teilnehmers an der Aktivität bestätigt.

21. Kommunikationsverfahren nach Anspruch 19, **dadurch gekennzeichnet, dass** die Nachricht einen Platz für die Aktivität bucht.

22. Kommunikationsverfahren nach Anspruch 19, **dadurch gekennzeichnet, dass** die Nachricht die Teilnahme des Teilnehmers an einem bestimmten Event der Aktivität bestätigt.

23. Kommunikationsverfahren nach Anspruch 19, **dadurch gekennzeichnet, dass** es weiter die Schritte umfasst,
- durch den zentralen Server (SE) eine Nachricht zurückzusenden, die die Verfügbarkeit von Platz in einem bestimmten Event der Aktivität bestätigt,
- durch den zentralen Server eine Nachricht zurückzusenden, die die Buchung der ausgewählten Aktivität ablehnt, wenn kein Platz verfügbar ist.

24. Kommunikationsverfahren nach Anspruch 12, **dadurch gekennzeichnet, dass** es weiter die Schritte umfasst:
- über den ersten Kanal (CH1) zur Auswahl eine Liste von Themen zu empfangen,
- die Themen auf dem drahtlosen Kommunikationsgerät anzuzeigen,
- *ein* Thema unter den vorgeschlagenen Themen auf dem drahtlosen Kommunikationsgerät (HHD) auszuwählen,
- an den zentralen Server (SE) eine Nachricht mit dem ausgewählten Thema zusammen mit der ID des drahtlosen Kommunikationsgeräts zu senden.

25. Kommunikationsverfahren nach Anspruch 12, **dadurch gekennzeichnet, dass** es weiter die Schritte umfasst,
- dem Benutzer eine beschränkte Funktionalität vorzulegen,
- dass der Benutzer entscheidet, den vollen Dienst zu kaufen,
- die Kaufentscheidung des Benutzers an den zentralen Server (SE) zu übermitteln,
- die volle Funktionalität zu eröffnen.

26. Kommunikationsverfahren nach Anspruch 12, **dadurch gekennzeichnet, dass** es weiter die Schritte umfasst,
- im drahtlosen Kommunikationsgerät gespeicherte persönliche Daten und Parameter an den zentralen Server (SE) zu übermitteln,
- diese Daten im Falle eines Defekts zu verwenden, um ein drahtloses Ersatz-Kommunikationsgerät zu programmieren,
- diese Daten zu benutzen, um für den Teilnehmer eine personalisierte Dokumentation zu erzeugen,
- diese Dokumentation dem Teilnehmer über E-Mail oder über das Internet verfügbar zu machen.

27. Drahtloses interaktives Kommunikationssystem mit einem zentralen Server (SE), der auf eine Hauptdatenbank (DB) zugreift, mit zumindest einer Basisstation (BST), zumindest zwei drahtlosen Kommunikationsgeräten (HHD) mit je einer lokalen Datenbank (LDB), einer Grafikanzeige (DP), einem Tastenfeld (KP), einem Mikroprozessor (CPU), der auf die lokale Datenbank (LDB) zugreift, wobei diese drahtlosen Kommunikationsgeräte (HHD) einen ersten Kommunikationskanal (CH1) zur Basisstation (BST) umfassen, um Broadcast-Daten, die eine Teilnehmerliste und verwandte Daten umfassen, zu empfangen und in der lokalen Datenbank (LDB) zu speichern, wobei diese Broadcast-Daten eine ID umfassen, die je Teilnehmer einzigartig ist, **dadurch gekennzeichnet, dass** es weiter einen zweiten Kommunikationskanal (CH2) umfasst, um ID-Pakete zu senden und zu empfangen, die IDs der drahtlosen Kommunikationsgeräte (HHD) umfassen, sowie Mittel zum Abruf, um die Daten abzurufen, die sich auf den in der Teilnehmerliste identifizierten Teilnehmer beziehen, und Mittel, um die auf den Teilnehmer bezogenen Daten anzuzeigen.

28. Drahtloses System nach Anspruch 27, **dadurch gekennzeichnet, dass** das drahtlose Kommunikationsgerät (HHD) weiter einen dritten Kommunikationskanal (CC) umfasst, um Punkt-zu-Punkt-Nachrichten direkt zu einem anderen drahtlosen Kommunikationsgerät (HHD) oder über die Basisstation (BST) zum zentralen Server (SE) zu senden und von dort zu empfangen.

29. Drahtloses System nach Anspruch 27, **dadurch gekennzeichnet, dass** das drahtlose Kommunikationsgerät (HHD) Analysemittel umfasst, um die empfangene Signalstärke der von einem anderen Kommunikationsgerät in Reichweite empfangenen ID-Pakete zu ermitteln und die Entfernung zwischen dem drahtlosen Kommunikationsgerät und dem anderen drahtlosen Kommunikationsgerät in Reichweite anzuzeigen.

30. Drahtloses System nach Anspruch 27, **dadurch gekennzeichnet, dass** das drahtlose Kommunikationsgerät (HHD) Analysemittel umfasst, um die Laufzeit von Paketen zu ermitteln, die mit einem anderen drahtlosen Kommunikationsgerät in Reichweite ausgetauscht werden, und die Entfernung zwischen dem drahtlosen Kommunikationsgerät und dem anderen drahtlosen Kommunikationsgerät in Reichweite anzuzeigen.

31. Drahtloses System nach Anspruch 27, **dadurch gekennzeichnet, dass** der Server (SE) vorprogrammierte Nachrichten sendet, die in der lokalen Datenbank (LDB) des drahtlosen Kommunikationsgeräts (HHD) gespeichert werden, wobei letzteres Mittel umfasst, um eine dieser Nachrichten auszuwählen, im Voraus definierte Abschnitte der Nachricht zu editieren und die Nachricht an ein anderes drahtloses Kommunikationsgerät (HHD) zu übermitteln.

32. Drahtloses System nach Anspruch 27, **dadurch gekennzeichnet, dass** einige der auf einen Teilnehmer bezogenen Daten nur nach Empfang eines Genehmigungscodes durch das drahtlose Kommunikationsgerät des Teilnehmers über den dritten Kanal (CC) oder über eine in das drahtlose Kommunikationsgerät integrierte Infrarot-Schnittstelle (IR) zugänglich sind.

33. Drahtloses System nach Anspruch 27, **dadurch gekennzeichnet, dass** das drahtlose Kommunikationsgerät automatisch erkennt, wenn es an eine Ladeeinheit (CTC) angeschlossen wird.

## Revendications

1. Dispositif de communication de participants interactif sans fil (HHD) comprenant un écran graphique (DP), un clavier (KP), un microprocesseur (CPU) ayant accès à une base de données locale (LBD), ce dispositif de communication comprenant un premier canal de communication (CH1) pour recevoir, d'un serveur central, des données émises comprenant une liste de participants et leurs données correspondantes et de stocker les données émises dans la base de données locale (LDB), ces données comprenant un identifiant qui est unique par participant, **caractérisé en ce qu'**il comprend de plus un deuxième canal de communication (CH2) pour envoyer et recevoir des paquets d'identification comprenant l'identifiant de l'expéditeur permettant l'identification d'autres dispositifs de communication et comprenant des moyens d'extraction pour extraire les données correspondantes du participant identifié de la liste des participants et des moyens pour afficher les données relatives dudit participant.

2. Dispositif de communication sans fil (HHD) selon la revendication 1, **caractérisé en ce qu'**il comprend de plus un troisième canal de communication (CC) pour envoyer et recevoir des messages point-à-point directement à un autre dispositif de communication sans fil (HHD) ou via des stations de base (BST) de et vers un serveur central (SE).

3. Dispositif de communication sans fil (HHD) selon la revendication 1, **caractérisé en ce qu'**il comprend un filtre pour détecter seulement l'identifiant de participants pré-choisis.

4. - Dispositif de communication sans fil (HHD) selon la revendication 1, **caractérisé en ce qu'**il comprend des moyens d'analyse pour déterminer l'intensité du signal du paquet d'identification reçu et d'afficher la distance entre le dispositif de communication sans fil et l'identification d'expéditeur.

5. Dispositif de communication sans fil (HHD) selon la revendication 1, **caractérisé en ce qu'**il comprend des moyens d'analyse pour déterminer le temps de parcours de paquets échangés avec d'autres dispositifs de communication sans fil dans la portée et d'afficher la distance entre le dispositif de communication et l'autre dispositif de communication sans fil dans la portée.

6. Dispositif de communication sans fil (HHD) selon la revendication 1, **caractérisé en ce que** les données relatives aux participants comprennent une image du participant, cette image étant affichée une fois que le dispositif de communication sans fil dudit participant est détecté.

7. Dispositif de communication sans fil (HHD) selon la revendication 1, **caractérisé en ce qu'**il comprend des messages d'émission préprogrammés qui sont stockés dans la mémoire et des moyens pour choisir un de ces messages, pour éditer des sections prédéterminées dudit message et pour transmettre ledit message à un autre dispositif de communication sans fil.

8. Dispositif de communication sans fil (HHD) selon la revendication 1, **caractérisé en ce qu'**il comprend de plus des moyens pour interdire d'autres dispositifs de communication sans fil d'informer leurs utilisateurs de la présence du participant utilisant le dispositif de communication sans fil.

9. Dispositif de communication sans fil (HHD) selon la revendication 2, **caractérisé en ce que** certaines des données relatives à un participant sont accessibles seulement après la réception d'un code d'autorisation par le dispositif de communication sans fil dudit participant par le troisième canal (CC) ou par une interface infrarouge (IR) intégrée dans le dispositif de communication sans fil.

10. Dispositif de communication sans fil (HHD) selon la revendication 2, **caractérisé en ce qu'**il comprend de plus l'envoi de messages via un troisième canal (CC) qui personnalise les données reçues via le premier canal de communication (CH1) selon les besoins d'un participant particulier.

11. Dispositif de communication sans fil (HHD) selon la revendication 2, **caractérisé en ce que** le dispositif de communication sans fil détecte la connexion dans un chargeur de batterie (CTC) pour optimiser la logistique.

12. Méthode de communication entre une pluralité de participants, chacun ayant un dispositif de communication sans fil (HHD) comprenant un identifiant unique, une base de données locale (LDB), un premier canal de communication (CH1) pour recevoir des données d'un serveur central (SE), cette méthode comprenant les étapes de:
- réception, du serveur central, de données émises comprenant une liste de participants et leurs données relatives via le premier canal de communication (CH1), chaque participant étant identifié par un identifiant unique,
- stocker ces données émises dans la base de données locale (LDB), **caractérisé en ce qu'**elle comprend les étapes suivantes de :
- recevoir par un deuxième canal de communication (CH2) capable de communiquer entre deux dispositifs de communication sans fil, des paquets d'identification d'autres dispositifs de communication sans fil (HHD), chaque paquet comprenant l'identifiant de l'expéditeur,
- extraire les données relatives du participant dans la base de données locale (LDB) basé sur l'identifiant reçu,
- afficher les détails dudit participant.

13. Méthode de communication selon la revendication 12, **caractérisée en ce qu'**elle comprend de plus les étapes de :
- envoyer et recevoir des messages point-à-point directement à un autre dispositif de communication sans fil ou via une station de base (BST) au serveur central (SE) par un troisième canal de communication (CC).

14. Méthode de communication selon la revendication 12, **caractérisée en ce qu'**elle comprend de plus les étapes de :
- sélectionner au moins un participant de la base de données locale (LDB),
- recevoir le paquet d'identification et en extraire l'identifiant,
- comparer ledit identifiant avec l'identifiant du participant sélectionné,
- inciter sur le dispositif de communication sans fil dans le cas où le participant attendu est détecté.

15. Méthode de communication selon la revendication 14, **caractérisée en ce qu'**elle comprend de plus les étapes de :
- détecter une intensité du signal du paquet d'identification,
- calculer une distance au dispositif de communication sans fil (HHD) qui envoie le paquet d'identification,
- organiser une liste de participants détectés selon la distance.

16. Méthode de communication selon la revendication 14, **caractérisée en ce qu'**elle comprend de plus l'étape d'extraire une image dudit participant.

17. Méthode de communication selon la revendication 12, **caractérisée en ce qu'**elle comprend de plus les étapes de :
- demander à l'autre dispositif de communication sans fil, un code d'autorisation,
- recevoir ledit code d'autorisation de l'autre dispositif de communication sans fil,
- accéder aux données cachées dans la base de données locale liée audit participant dit.

18. Méthode de communication selon la revendication 13, **caractérisée en ce qu'**elle comprend de plus les étapes de :
- recevoir des messages préprogrammés via le premier canal (CH1),
- stocker lesdits messages dans la base de données locale (LDB),
- sélectionner un message des messages stockés,
- éditer des parties prédéterminées dudit message,
- sélectionner de la liste de participants, le destinataire dudit message,
- envoyer ledit message au participant choisi via le troisième canal (CC).

19. Méthode de communication selon la revendication 12, **caractérisée en ce qu'**elle comprend de plus les étapes de :
- recevoir via le premier canal (CH1), une liste d'activités disponibles pendant une période prédéterminée,
- stocker cette liste d'activités dans la base de données locale (LDB),
- afficher la liste et sélectionner une activité de la liste,
- envoyer un message au serveur central relatif à l'activité choisie et le participant envoyant ce message.

20. Méthode de communication selon la revendication 19, **caractérisée en ce que** le message confirme la participation du participant à l'activité.

21. Méthode de communication selon la revendication 19, **caractérisée en ce que** le message réserve une place à l'activité.

22. Méthode de communication selon la revendication 19 **caractérisée en ce que** le message confirme la participation du participant à un événement particulier de l'activité.

23. Méthode de communication selon la revendication 19, **caractérisée en ce qu'**elle comprend de plus les étapes de :
- renvoyer par le serveur central (SE) un message confirmant la disponibilité 1 de place dans un événement particulier de l'activité,
- renvoyer par le serveur central un message refusant l'inscription à l'activité choisie si aucune place n'est disponible.

24. Méthode de communication selon la revendication 12, **caractérisée en ce qu'**elle comprend de plus les étapes de :
- recevoir par le premier canal (CH1), une liste de sujets pour sélection,
- afficher les sujets sur le dispositif de communication sans fil,
- sélectionner sur le dispositif de communication sans fil (HHD), un sujet parmi les sujets proposés,
- envoyer un message au serveur central (SE) avec le sujet choisi ainsi que l'identifiant du dispositif de communication sans fil.

25. Méthode de communication selon la revendication 12, **caractérisée en ce qu'**elle comprend de plus les étapes de :
- présenter une fonctionnalité limitée à l'utilisateur,
- l'utilisateur sélectionnant l'achat du service complet,
- transmettre la décision d'achat de l'utilisateur au serveur central (SE)
- débloquer la pleine fonctionnalité

26. Méthode de communication selon la revendication 12, **caractérisée en ce qu'**elle comprend de plus les étapes de
- transmettre des données personnelles et paramètres stockés dans le dispositif de communication sans fil au serveur central (SE),
- utiliser lesdites données pour programmer un dispositif de communication sans fil de remplacement en cas de défectuosité,
- utiliser lesdites données pour produire une documentation personnalisée pour le participant,
- mettre à disposition ladite documentation aux participants via courrier électronique ou l'Internet

27. Système de communication interactif sans fil comprenant un serveur central (SE) accédant à une base de données principale (DB), au moins une station de base (BST), au moins deux dispositifs de communication sans fil (HHD) chacun ayant une base de données locale (LDB), un affichage graphique (DP), un clavier (KP), un microprocesseur (CPU) ayant accès à la base de données locale (LDB), ces dispositifs de communication sans fil (HHD) comprenant un premier canal de communication (CH1) à la station de base (BST) pour recevoir et stocker dans la base de données locale (LDB), des données émises comprenant une liste de participants et des données y relatives, ces données émises comprenant un identifiant qui est unique par participant, **caractérisé en ce qu'**il comprend de plus un deuxième canal de communication (CH2) pour envoyer et recevoir des paquets d'identification comprenant les identifiants de dispositifs de communication sans fil (HHD), et comprenant des moyens d'extraction pour extraire les données liées au participant identifié de la liste de participants et des moyens pour afficher les données liées audit participant.

28. Système sans fil selon la revendication 27, **caractérisé en ce que** le dispositif de communication sans fil (HHD) comprend de plus un troisième canal de communication (CC) pour envoyer et recevoir des messages point-à-point directement à un autre dispositif de communication sans fil (HHD) ou via la station de base (BST) de et vers le serveur central (SE).

29. Système sans fil selon la revendication 27, **caractérisé en ce que** le dispositif de communication sans fil (HHD) comprend des moyens d'analyse pour déterminer l'intensité du signal reçu de paquets reçus d'un autre dispositif de communication sans fil dans la portée et afficher une estimation de la distance entre le dispositif de communication sans fil et l'autre dispositif de communication sans fil dans la portée.

30. Système sans fil selon la revendication 27, **caractérisé en ce que** le dispositif de communication sans fil (HHD) comprend des moyens d'analyse pour déterminer le temps de parcours de paquets échangés avec d'autres dispositifs de communication sans fil dans la portée et d'afficher la distance entre le dispositif de communication et l'autre dispositif de communication sans fil dans la portée.

31. Système sans fil selon la revendication 27, **caractérisé en ce que** le serveur (SE) émet des messages préprogrammés qui sont stockés dans la base de données locale (LDB) du dispositif de communication sans fil (HHD), ce dernier comprenant des moyens pour choisir un de ces messages, éditer une section prédéterminée dudit message et transmettre ledit message à un autre dispositif de communication sans fil (HHD).

32. Système sans fil selon la revendication 27, **caractérisé en ce que** certaines des données relatives à un participant sont accessibles seulement après reçu un code d'autorisation par le dispositif de communication sans fil dudit participant par le troisième canal (CC) ou par une interface infrarouge (IR) intégrée dans le dispositif de communication sans fil.

33. Système sans fil selon la revendication 27, **caractérisé en ce que** le dispositif de communication sans fil détecte automatiquement quand il est connecté à une unité de recharge (CTC).
